# EUROPÄISCHE PATENTSCHRIFT

(11) **EP 2 336 003 B1**
(45) Veröffentlichungstag und Bekanntmachung des Hinweises auf die Patenterteilung: **03.09.2014**
(21) Anmeldenummer: 10015295.8
(22) Anmeldetag: 04.12.2010
(51) Int. Cl.: B62D 7/15, B62D 7/14

(54) **Hydraulische Lenkung**
Hydraulic steering
Direction hydraulique

(30) Priorität: 19.12.2009 DE 102009059677
(43) Veröffentlichungstag der Anmeldung: 22.06.2011
(73) Patentinhaber: Hydac System GmbH, 66280 Sulzbach/Saar (DE)
(72) Erfinder: Huth, Heinz-Peter, 66802 Überherrn (DE)
(74) Vertreter: Bartels & Partner

(56) Entgegenhaltungen:
- EP-A2- 1 911 659
- WO-A1-92/06881
- DE-A1- 3 902 810

## Beschreibung

Die Erfindung betrifft eine hydraulische Lenkung für eine Vor- oder Nachlaufachse eines Fahrzeuges, insbesondere in Form eines Nutzfahrzeuges, mit den Merkmalen im Oberbegriff von Anspruch 1.

Um bei einem Kraftfahrzeug, insbesondere bei einem Nutzfahrzeug oder Lastkraftwagen, mit mehr als zwei Achsen das Fahrverhalten, z.B. hinsichtlich Wendigkeit und Verminderung eines Reifenverschleißes etc., zu verbessern, wird wenigstens eine als Nachlauf- oder Vorlaufachse ausgebildete Starrachse mit unlenkbaren Rädern durch eine Lenkachse mit lenkbaren Rädern ersetzt. Zur Lenkung der Räder dieser Nach- oder Vorlaufachse wird das Fahrzeug mit einer auch als Zusatzlenkung bezeichneten Lenkung ausgestattet. Solche Lenkungen ermöglichen die Differenz der Lenkwinkel von Einzelrädern der Vorderachse zu denen der Zusatzlenkachse durch die Wahl eines bestimmten Übersetzungsverhältnisses zu kompensieren. Dabei existieren verschiedene Ausführungskonzepte für solche Lenkungen.

So ist es bekannt, die Lenkkinematik für die Räder einer Vor- oder Nachlaufachse durch eine mechanische Hebelverbindung mit einem Lenkgetriebe für eine derartige Achse etwa durch eine Hebelverbindung mit einem Lenkstockhebel zu realisieren. Solche Lenkungen erfordern einen relativ großen Installationsraum im Fahrzeug.

Die DE-PS 894 208 beschreibt eine Zusatzlenkung, bei der die Differenz der Lenkeinschlagwinkel der Einzelräder der Vorderachse zu denen der Zusatzlenkachse durch die Wahl eines bestimmten Übersetzungsverhältnisses kompensiert wird. Hierbei wird der Querschnitt des jeweiligen Nehmerzylinders entsprechend vergrößert. Der Kurvenmittelpunkt wird auf die ungelenkte, in der Regel angetriebene Hinterachse bezogen. Die Einzelräderstellungen je einer Achse sind zudem differenzierbar. Nachteilig an den bekannten hydraulischen Lenkvorrichtungen ist der erhebliche Bauaufwand. So bedarf es im Geberbereich der Vorderachse beispielsweise eines von einer Schwinge gesteuerten, sich in Fahrtrichtung erstreckenden Doppelzylinders. Geber- und Nehmerzytinder können über geeignete Ventilanordnungen miteinander synchronisiert werden. Solche geschlossenen hydrostatischen Lenksysteme sind hydraulisch vorgespannt und weisen eine hohe Verfügbarkeit und Betriebssicherheit auf.

Ferner beschreibt die DE 103 04 796 B4 eine hydraulische Lenkung mit einem ersten Servomotor, der eine Lenkhilfskraft auf ein erstes gelenktes Rad eines Fahrzeugs bereitstellt und mit einem zweiten Servomotor, der auf mindestens ein zweites gelenktes Rad wirkt. Es ist eine Kompensationsventilanordnung vorgesehen, mit der zwischen den beiden Servomotoren Druckmittel zu- oder abgeführt werden kann. Die Kompensationsventilanordnung ermöglicht zum einen, dass die beiden Servomotoren den gleichen Einschlagwinkel an den gelenkten Rädern und zum anderen eine mögliche Lenkwinkeländerung zwischen dem ersten Servomotor und dem zweiten Servomotor erzeugen.

Die DE 39 02 810 A1 beschreibt eine Mehrachslenkanlage für ein Fahrzeug, mit einem mechanisch-hydraulischen Lenkgetriebe mit einem Arbeitszylinder zur Bereitstellung einer Lenkhilfskraft für eine Achse und für eine hydrostatische, mit einer Blockiereinrichtung versehene Lenkverbindung für eine zweite Achse, die über ein Lenkgestänge mittels eines zweiten Arbeitszylinders betätigbar ist. Die Blockiereinrichtung umfaßt einen im Lenkgestänge der zweiten Achse angeordneten Zylinder, in dem ein mit dem Lenkgestänge verbundenes und damit verstellbares Halteglied durch ein ein- und ausrückbares Blockierteil mechanisch arretierbar ist. Die Mehrachslenkanlage sieht insbesondere in dem Lenkgestänge der zweiten Achse eine Zentriereinrichtung vor, mit einem Zentrierkolben, wobei die beiden Kolbenräume der Zentrierkolben von einer Druckmittelquelle aus, die wenigstens im Bereich einer Geradeausstellung durch ein Schaltglied aktivierbar ist, unter Druck setzbar sind. Dadurch ist im Betrieb der Mehrachslenkanlage eine Synchronisierung der gelenkten Achsen zueinander ermöglicht.

Ferner sind hydraulisch/elektronisch arbeitende Lenkvorrichtungen bekannt, bei denen eine von der Lenkbewegung beeinflusste Elektronik eine Druckmittelpumpe steuert. Aus einem Lenkwinkel der Hauptlenkachse und weiteren fahrt- und fahrzeugspezifischen Daten errechnet dann eine Steuerund/oder Regelungseinrichtung einen Lenkwinkel-Sollwert für die gelenkten Räder der Zusatzlenkachse. Zudem werden Stellgrößen zur Ventilansteuerung von Proportionalventilen errechnet und die lenkbaren Räder der Zusatzlenkachse angesteuert.

Eine Lenkwinkelübertragung oder -steuerung gemäß den sogenannten Ackermann-Bedingungen kann von solchen elektro-hydraulischen Lenkungen über eine geeignete Software bestimmt werden. Um sicherheitskritische Betriebssituationen auszuschließen, finden eine Selbstüberwachung und gegebenenfalls ein Eingriff im Sinne eines Fail-Safe- oder Fail-Operate-Betriebsmodus statt.

Die EP 1 911 659 A2 beschreibt eine hydraulische Lenkung für eine Achse eines Fahrzeuges, insbesondere in Form eines Nutzfahrzeugs, mit einem zweikammerigen Gebärzylinder, dessen erste Kammer und dessen zweite mer und dessen zweite Kammer über eine erste Hydraulikleitung und eine zweite Hydraulikleitung mit Kammern eines Nehmerzylinders zur Lenkwinkeleinstellung zumindest eines lenkbaren Rades an der Achse fluidführend verbunden sind, wobei die hydraulische Lenkung eine Einrichtung zur Überlagerung der Fluidströme von dem Geberzylinder zu dem Nehmerzylinder mittels eines Zusatzfluidstroms aufweist, wobei die Einrichtung einen Zumesszylinder zur Bereitstellung des Zusatzfluidstromes aufweist. Der Kolben des Zumesszylinders wird dabei von einem Motor über ein Getriebe betätigt.

Aus der WO 92/06881 ist eine weitere Steuerung für eine Nachlaufachse eines Fahrzeuges bekannt, die einen Zumesszylinder aufweist.

Ausgehend von dem genannten Stand der Technik liegt der Erfindung die Aufgabe zugrunde, eine konstruktiv einfach aufbauende und betriebssichere hydraulische Lenkung anzugeben.

Diese Aufgabe wird mit einer hydraulischen Lenkung mit den Merkmalen des Patentanspruches 1 in seiner Gesamtheit gelöst.

Gemäß dem Kennzeichen von Anspruch 1 ist vorgesehen, dass die Einrichtung zur Überlagerung der Fluidströme eine hydrostatische Stelleinrichtung zur Bemessung des Zusatzfluidstromes aufweist.

Überdiese Stelleinrichtung ist eine mechanische Kopplung mit der Kolbenstange des Zumesskolbens realisiert. Dies ist insbesondere deshalb vorteilhaft, da hierbei eine für die hydraulische Lenkung vorgesehene Steuer- und/oder Regelungseinrichtung zur Ansteuerung herangezogen werden kann.

Die erfindungsgemäße hydraulische Lenkung zur Ansteuerung einer Vor- oder Nachlaufachse eines Kraftfahrzeugs weist einen zweikammerigen Geberzylinder auf, der einen Lenkwinkel-Sollwert über seine beiden Kammern über jeweils eine Hydraulikleitung an einen Nehmerzylinder weitergibt. Der Nehmerzylinder steuert die lenkbaren Räder der Vor- oder Nachlaufachse an, so dass grundsätzlich von einem geschlossenen hydraulischen System auszugehen ist. Erfindungsgemäß weist die hydraulische Lenkung eine Möglichkeit zur hydraulischen Überlagerung bzw. zur Veränderung der Lenkübersetzung zwischen dem Geberzylinder und dem Nehmerzylinder auf, wobei eine Einrichtung zur Überlagerung der Fluidströme zwischen dem Geberzylinder und dem Nehmerzylinder vorgesehen ist, die einen Zumesszylinder zur Bereitstellung eines Zusatzfluidstromes zwischen Geber- und Nehmerzylinder umfaßt. Auf einfache Weise ergibt sich so die Möglichkeit, eine hydraulische Lenkung darzustellen, die unabhängig von dem Achsabstand der Achsen eine sichere, exakte Nachführung der gelenkten Räder einer Vor- oder Nachlaufachse ermöglicht.

Der Zumesszylinder und seine zumindest erste und zweite Arbeitskammer, die von einem bewegbaren Kolben voneinander getrennt sind, kann mit einer fluidführenden Verbindung mit jeweils der ersten und der zweiten Hydraulikleitung zwischen dem Geber- und Nehmerzylinder eingekoppelt bzw. verbunden werden. Der Zumesszylinder ist somit ständig in einer geöffneten hydraulischen Verbindung zwischen den die Arbeitskammern des Geberzylinders und des Nehmerzylinders verbindenden ersten und zweiten Hydraulikleitungen angeordnet. Ist der Zumesskolben des Zumesszylinders dabei in seiner Neutralposition, so findet eine direkte Stellwegübertragung zwischen dem Geberzylinder und dem Nehmerzylinder statt. Wird das Volumen der ersten und zweiten Arbeitskammer des Zumesszylinders jedoch verändert, beispielsweise durch einen mechanischen Stellvorgang des Zumesskolbens, der durch einen hydraulischen, pneumatischen oder elektrisch arbeitenden Servomotor bewirkt sein kann, so läßt sich die Übersetzung verändern. Druckmittel kann dabei aus dem Zumesszylinder in die Kammern des Nehmerzylinders unter Druck gefördert werden und so der Stellweg des Zumesszylinders dem Stellweg des Geberzylinders überlagert werden.

Zur Minimierung des Bauraumbedarfs der hydrostatischen Lenkung empfiehlt sich ein räumlicher Zusammenschluss des Zumesszylinders mit einem Gehäuse der hydrostatischen Stelleinrichtung.

Eine Minimierung des Bearbeitungsaufwands und des Teilebedarfs der hydrostatischen Lenkung ergibt sich durch den Zusammenschluss der Kolbenstange des Zumesskolbens mit einer Kolbenstange eines Stellkolbens der hydrostatischen Stelleinrichtung. Dabei ist es zweckmäßig, alle Kolben auf der Kolbenstange in einem Fertigungsvorgang zu bilden. Zumindest ein Proportional-Wegeventil, das einstufig gebildet sein kann, dient als Übertragungsglied der Sensorsignale der Steuer- und/oder Regelungseinrichtung zu der hydrostatischen Stelleinrichtung, wobei die Arbeitskammern der hydrostatischen Steuereinrichtung von einer ersten Druckmittelquelle beaufschlagt sein können. Dem Proportional-Wegeventil nachgeschaltet ist aus Sicherheitsgründen ein 2/2-Wegeventil, das eine Übersteuerungsmöglichkeit für das 4/3-Proportional-Wegeventil darstellt und bei einer etwaigen Fehlfunktion jedwede Stellbewegung des Stellkolbens der hydrostatischen Stelleinrichtung verhindern kann.

Die den Geberzylinder und den Nehmerzylinder miteinander verbindende erste und zweite Hydraulikleitung ist vorzugsweise mit einem Druckspeicher verbunden, so dass das Druckmittel in dem Geberzylinder und im Nehmerzylinder nebst dem Zumesszylinder vorgespannt ist.

Es ist vorteilhaft, das Druckmittel für die hydrostatische Stelleinrichtung mit Hilfe eines Druckventils, insbesondere eines einstellbaren Druckbegrenzungsventils, vorzuspannen. Zu diesem Zweck ist insbesondere eine Rücklaufleitung zu einem Druckmittelbehälter mit einem Druckbegrenzungsventil verbunden.

Zur Synchronisierung des Geber- und Nehmerzylinders ist in einer fluidführenden Verbindung zwischen der ersten Hydraulikleitung und einer Arbeitskammer der hydrostatischen Stelleinrichtung und in einer fluidführenden Verbindung zwischen der zweiten Hydraulikleitung und einer weiteren Arbeitskammer der hydrostatischen Stelleinrichtung je ein Schaltventil eingebracht. Die jeweils fluidführende Verbindung mit den Schaltventilen verbindet oder trennt dann jeweils die Verbindung zu den Arbeitskammern der hydrostatischen Stelleinrichtung.

Die Synchronisierung des Geberzylinders und des Nehmerzylinders erfolgt, indem die Schaltventile in eine geöffnete Schaltstellung gebracht werden und mit Hilfe einer Zentriereinrichtung der Stellkolben der hydrostatischen Stelleinrichtung in eine neutrale Position gebracht wird und anschließend die Schaltventile wieder geschlossen werden. Die Zentriereinrichtung kann in einem besonders bevorzugten Ausführungsbeispiel der hydraulischen Lenkung hydrostatisch arbeiten, indem ein doppelt wirkender hydrostatischer Zylinder und dessen beide Arbeitskammern mit Druckmittel beaufschlagt werden. Der Kolben der Zentriereinrichtung kann eine Abflussöffnung zu einem Druckmittelbehälter in der Art eines Schiebers verschließen und öffnen, wobei eine zentrierte Position des Kolbens erreicht ist, wenn die Abflussöffnung verschlossen ist.

Die Zentriereinrichtung kann in vorteilhafter Weise in demselben Gehäuse wie der Zumesszylinder und die hydrostatische Stelleinrichtung angeordnet sein. Bevorzugt ist der Kolben der Zentriereinrichtung auf der Kolbenstange des Zumesskolbens und des Kolbens der hydrostatischen Stelleinrichtung festgelegt. Dadurch ergibt sich eine direkte spielfreie Verbindung der drei genannten Einrichtungen. Die Synchronisierung des Geber- und Nehmerzylinders erfolgt auf Basis von Signalen, die die Position des Geberzylinder-Kolbens oder der Kolbenstange sowie die Position des Nehmerzylinder-Kolbens widerspiegeln.

Die Zentriereinrichtung, die Zumesseinrichtung und die hydrostatische Stelleinrichtung können neben einer gemeinsamen Kolbenstange ein gemeinsames Zylindergehäuseteil aufweisen mit gleicher durchgehender Bohrung, die in entsprechende Trennwände des Zylindergehäuses eingesetzt sind, um die funktionalen Bereiche, die die einzelnen genannten Einrichtungen bilden, voneinander zu trennen. Dadurch ergibt sich insbesondere der Vorteil der Minimierung der Material- und Herstellungskosten für die hydraulische Lenkung.

Nachstehend ist die Erfindung anhand der Zeichnung im Einzelnen erläutert. Es zeigen:
- Fig. 1: eine schematische Längsschnittdarstellung der hydraulischen Lenkung ohne Synchronisierung des Geber- und Nehmerzylinders mit zugehörigem Schaltplan; und
- Fig. 2: eine schematische Längsschnittdarstellung der hydraulischen Lenkung mit Synchronisierung des Geber- und Nehmerzylinders nebst Schaltplan.

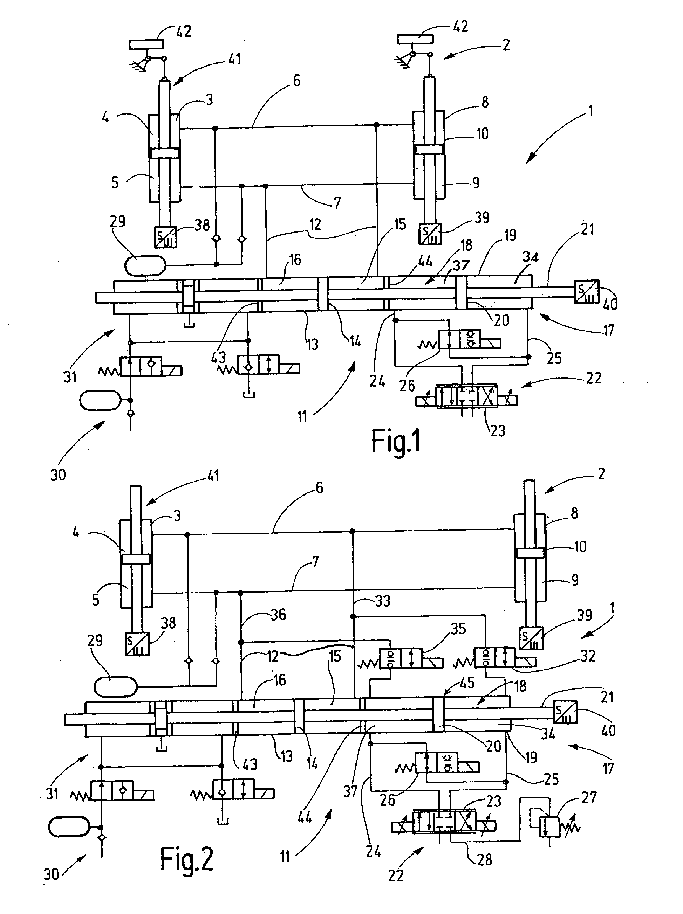

In der Fig. 1 ist in der Art eines schematischen Längsschnitts von Baugruppen und deren Verschaltung eine als Ganzes mit 1 bezeichnete hydraulische Lenkung gezeigt. Die hydraulische Lenkung für ein im Übrigen nicht näher gezeigtes Nutzkraftfahrzeug weist eine Vor- oder Nachlaufachse 2 auf. Die Nachlaufachse 2 ist mit einem Geberzylinder 3, einer gelenkten Vorderachse 41 über eine geschlossene fluidführende Verbindung hydraulisch wirkverbunden.

Durch diese konstruktive Maßnahme wird das Kurvenfahrverhalten des Nutzkraftfahrzeuges verbessert. Beispielsweise wird der Schräglauf an den Rädern der Nachlaufachse 2 und somit deren Abrieb erheblich vermindert sowie die gesamte Belastung eines Fahrzeugrahmens des Nutzkraftfahrzeugs herabgesetzt. Ferner verbessert sich dadurch die Wendigkeit des Fahrzeugs.

Eine erste Kammer 4 des zweikammerigen Geberzylinders 3 ist über eine erste Hydraulikleitung 6 mit einer Kammer 8 des Nehmerzylinders 10 fluidführend verbunden. Eine zweite Kammer 5 des Geberzylinders 3 ist wiederum über eine zweite Hydraulikleitung 7 mit einer Kammer 9 des Nehmerzylinders 10 verbunden.

Die nicht näher dargestellten Achsschenkelbolzen der Räder 42 der Nachlaufachse 2 können neutral gelagert sein, wodurch eine Lenkung der Räder der Nachlaufachse 2 unabhängig von der Fahrrichtung des Nutzkraftfahrzeugs möglich ist. Um ein optimiertes Fahrverhalten des Nutzkraftfahrzeugs in Abhängigkeit von aktuellen fahrt- und fahrzeugspezifischen Parametern zu bewirken und/oder um alle gelenkten Räder des Nutzkraftfahrzeugs annähernd gemäß den Ackermann-Bedingungen zu betreiben, ist eine Einrichtung 11 zur Überlagerung der Fluidströme von dem Geberzylinder 3 zu dem Nehmerzylinder 10 vorgesehen. Die Einrichtung 11 ist in der Lage, den Fluidströmen einen Zusatzfluidstrom 12 zu überlagern. Zu diesem Zweck ist ein Zumesszylinder 13 vorgesehen, der als doppelt wirkender hydrostatischer Zylinder ausgebildet ist. Der Zumesszylinder 13 weist eine Kolbenstange 21 auf, die in einem etwa dreifach so langen Gehäuse 19 axial verschieblich gelagert ist wie der mögliche Verschiebeweg eines Zumesskolbens 14 des Zumesszylinders 13, der in dem gezeigten Gehäuse 19 zwischen zwei Trennwänden 43, 44 verschiebbar geführt ist.

Eine erste Arbeitskammer 15 des Zumesszylinders 13 ist fluidführend mit der ersten Hydraulikleitung 6 und die zweite Arbeitskammer 16 ist fluidführend mit der zweiten Hydraulikleitung 7 verbunden, so dass bei einer Längsverschiebung des Zumesskolbens 14 Druckmittel aus den Arbeitskammern 15, 16 des Zumesszylinders 13 dem jeweiligen Druckmittelstrom zu den Kammern 8 und 9 des Nehmerzylinders 10 zugeführt oder abgeführt werden kann. Dadurch ergibt sich eine Lenkwinkelüberlagerung der gelenkten Räder 42 der Nachlaufachse 2.

Der Zumesskolben 14 wird von einer hydrostatischen Stelleinrichtung 17 nach Maßgabe von Sensorsignalen des Nutzkraftfahrzeugs, wie Lenkwinkel-Sollwert an einer Lenkhandhabe, Fahrgeschwindigkeit, Lenkwinkel-Istwert, Position der Kolbenstange des Geberzylinders 3 und der Kolbenstange des Nehmerzylinders 10 sowie der Position der Kolbenstange 21 des Zumesszylinders 13 verschoben. Zur Verarbeitung der Signale der Sensoren dient eine nicht näher gezeigte Steuer- und/oder Regeleinrichtung, die unter anderem Algorithmen zur Ermittlung eines Positions-Sollwertes für die Kolbenstange 21 enthält.

Zur Verschiebung des Zumesskolbens 14 dient ein mechanisches Koppelglied 18 mit der hydrostatischen Stelleinrichtung 17. Das mechanische Koppelglied 18 ist in den in den Fig. 1 und 2 gezeigten Ausführungsbeispielen vorrangig durch die Kolbenstange 21 gebildet, an der ein Stellkolben 20 festgelegt ist.

Der Stellkolben 20 ist in derselben gleich großen Bohrung in dem Gehäuse 19 axial verschieblich gelagert wie der Zumesskolben 14. Wie die Fig. 1 und 2 des weiteren zeigen, sind die Arbeitskammern 34 und 37 der hydrostatischen Stelleinrichtung 17 mit einem als 4/3-Proportional-Wegeventil 23 gebildeten Schaltventil 22 verbunden, das die Bewegung des Stellkolbens 20 steuert. In die Steuerleitung 24,25 zwischen den Arbeitskammern 34, 37 und dem Schaltventil 22 ist ein 2/2-Wegeventil 26 geschaltet. Das 2/2-Wegeventil 26 ermöglicht eine Übersteuerung des 4/3-Wegeventils 23 in dem Sinne, dass es die Ansteuerung der hydrostatischen Stelleinrichtung 17 sperrt; insbesondere im Fehlerfall oder Leckagefall des 4/3-Wegeventils sowie dessen zugehöriger elektrischer Ansteuerung.

Wie die Fig. 2 zeigt, kann das die hydrostatische Stelleinrichtung 17 beaufschlagende Druckmittel durch ein Druckbegrenzungsventil 27 an einem tankseitigen oder druckmittelbehälterseitigen Anschluss 28 des 4/3-Wegeventils 23 vorgespannt werden. Auch das Druckmittel in dem Geber-und Nehmerzylinder sowie in den mit diesen verbundenen Leitungen kann durch einen Druckspeicher 29 vorgespannt sein. Der Druckspeicher 29 ist in dem in Fig. 2 gezeigten Ausführungsbeispiel mit der ersten Hydraulikleitung 6 und der zweiten Hydraulikleitung 7 fluidführend verbunden. Dadurch sind alle vier Arbeitskammern 4, 5 und 8, 9 der betreffenden Zylinder mit dem gleichen Fluiddruck vorgespannt.

Die hydraulische Lenkung 1 weist des Weiteren eine Einrichtung 30 zur Versorgung der Zentriereinheit oder Zentriereinrichtung 31 auf. Zu diesem Zweck ist in dem Gehäuse 19, das die hydrostatische Stelleinrichtung 17 und den Zumesszylinder 13 bildet, als Zentriereinheit eine hydrostatisch wirkende Zentriereinrichtung 31 angeordnet. Mit Hilfe der Zentriereinrichtung 31 lässt sich der Zumesskolben 14 in eine neutrale Position fahren. Die Einrichtung 30 zur Versorgung umfasst zwei Schaltventile, wobei ein erstes Schaltventil 32 eine fluidführende Verbindung 33 zwischen der ersten Hydraulikleitung 6 und einer Arbeitskammer 34 der hydrostatischen Stelleinrichtung 17 und ein weiteres zweites Schaltventil 35 eine fluidführende Verbindung 36 zwischen der zweiten Hydraulikleitung 7 und einer weiteren Arbeitskammer 37 herstellt oder diese trennt. In einer geöffneten Position der Schaltventile 32, 35 lassen sich der Geber- und der Nehmerzylinder bei entsprechender Schaltstellung des 2/2-Wegeventils 26 und des 4/3-Wegeventils 23 der hydrostatischen Stelleinrichtung 17 miteinander synchronisieren.

Die hydraulische Lenkung 1 weist ferner zumindest einen Positionssensor 38 an dem Geberzylinder 3 und einen Positionssensor 39 an dem Nehmerzylinder 10 sowie einen dritten Positionssensor 40 an der Kolbenstange 21 auf. Die Signale der betreffenden Positionssensoren 38, 39, 40 werden mit weiteren Signalen von Sensoren an dem Nutzfahrzeug, die den aktuellen Fahrzustand und Fahrzeugzustand beschreiben, in der nicht näher aufgezeigten Steuer- und/oder Regelungseinrichtung nach fahrzeugspezifischen, vorgebbaren und abgespeicherten Algorithmen verarbeitet und hierdurch eine Überlagerung der Stellsignale des Geberzylinders 3 mit dem Nehmerzylinder 10 in der beschriebenen vorteilhaften Weise bewirkt.

## Patentansprüche

1. Hydraulische Lenkung für eine Vor- oder Nachlaufachse (2) eines Fahrzeugs, insbesondere in Form eines Nutzfahrzeugs, mit einem zweikammerigen Geberzylinder (3), dessen erste Kammer (4) und dessen zweite Kammer (5) über eine erste Hydraulikleitung (6) und eine zweite Hydraulikleitung (7) mit Kammern (8,9) eines Nehmerzylinders (10) zur Lenkwinkeleinstellung zumindest eines lenkbaren Rades an der Vor- oder Nachlaufachse (2) fluidführend verbunden sind, wobei die hydraulische Lenkung (1) eine Einrichtung (11) zur Überlagerung der Fluidströme von dem Geberzylinder (3) zu dem Nehmerzylinder (10) mittels eines Zusatzfluidstroms (12) aufweist, wobei die Einrichtung (11) einen Zumesszylinder (13) zur Bereitstellung des Zusatzfluidstromes (12) aufweist, **dadurch gekennzeichnet, dass** die Einrichtung (11) zur Überlagerung der Fluidströme eine hydrostatische Stelleinrichtung (17) zur Bemessung des Zusatzfluidstromes (12) aufweist.

2. Hydraulische Lenkung nach Anspruch 1, **dadurch gekennzeichnet, dass** der Zumesszylinder (13) einen doppelt wirkenden Zumesskolben (14) aufweist, der eine erste Arbeitskammer (15) von einer zweiten Arbeitskammer (16) in dem Zumesszylinder (13) trennt, wobei die erste Arbeitskammer (15) mit der ersten Hydraulikleitung (6) und die zweite Arbeitskammer (16) mit der zweiten Hydraulikleitung (7) fluidführend verbunden ist.

3. Hydraulische Lenkung nach einem der vorhergehenden Ansprüche, **dadurch gekennzeichnet, dass** die hydrostatische Stelleinrichtung (17) mit dem Zumesskolben (14) über ein mechanisches Koppelglied (18) verbunden ist.

4. Hydraulische Lenkung nach einem der vorhergehenden Ansprüche, **dadurch gekennzeichnet, dass** die hydrostatische Stelleinrichtung (17) in demselben Gehäuse (19), das den Zumesszylinder (13) bildet, aufgenommen ist.

5. Hydraulische Lenkung nach einem der vorhergehenden Ansprüche, **dadurch gekennzeichnet, dass** der Zumesskolben (14) und ein Stellkolben (20) der hydrostatischen Stelleinrichtung (17) eine gemeinsame Kolbenstange (21) aufweisen.

6. Hydraulische Lenkung nach einem der vorhergehenden Ansprüche, **dadurch gekennzeichnet, dass** die Arbeitskammern (34, 37) der hydrostatischen Stelleinrichtung (17) von einem Schaltventil (22) angesteuert sind.

7. Hydraulische Lenkung nach einem der vorhergehenden Ansprüche, **dadurch gekennzeichnet, dass** das Schaltventil (22) ein 4/3-Wegeventil (23) oder ein Proportionalventil ist.

8. Hydraulische Lenkung nach einem der vorhergehenden Ansprüche, **dadurch gekennzeichnet, dass** in Steuerleitungen (24, 25) zwischen dem Schaltventil (22) und der hydrostatischen Stelleinrichtung (17) ein 2/2-Wegeventil (26) geschaltet ist.

9. Hydraulische Lenkung nach einem der vorhergehenden Ansprüche, **dadurch gekennzeichnet, dass** das Druckmittel in der hydrostatischen Stelleinrichtung (17) vorgespannt ist.

10. Hydraulische Lenkung nach einem der vorhergehenden Ansprüche, **dadurch gekennzeichnet, dass** das Druckmittel in der hydrostatischen Stelleinrichtung (17) durch ein Druckbegrenzungsventil (27) in einer Rücklaufleitung (28) zu einem Druckmittelbehälter führend vorgespannt ist.

11. Hydraulische Lenkung nach einem der vorhergehenden Ansprüche, **dadurch gekennzeichnet, dass** die hydraulische Lenkung (1) eine Einrichtung (30) zur Synchronisierung des Geber- und Nehmerzylinders (3, 10) aufweist.

12. Hydraulische Lenkung nach einem der vorhergehenden Ansprüche, **dadurch gekennzeichnet, dass** eine Einrichtung zur Synchronisierung einer Zentriereinrichtung (31) vorhanden ist, mit Hilfe derer der Zumesskolben (14) des Zumesszylinders (13) in eine neutrale Position bringbar ist.

13. Hydraulische Lenkung nach einem der vorhergehenden Ansprüche, **dadurch gekennzeichnet, dass** die Zentriereinrichtung (31) ein erstes Schaltventil (32) umfasst, das eine fluidführende Verbindung (33) zwischen der ersten Hydraulikleitung (6) und der Arbeitskammer (34) der hydrostatischen Stelleinrichtung (17) und ein zweites Schaltventil (35) umfasst, das eine fluidführende Verbindung (36) zwischen der zweiten Hydraulikleitung (7) und der Arbeitskammer (37) der hydrostatischen Stelleinrichtung (17) verbindet oder trennt und dass in einer geöffneten Position der Schaltventile (32, 35) der Geberzylinder (3) und der Nehmerzylinder (10) miteinander synchronisierbar sind.

14. Hydraulische Lenkung nach einem der vorhergehenden Ansprüche, **dadurch gekennzeichnet, dass** die Zentriereinrichtung (31) zur Zentrierung der hydrostatischen Stelleinrichtung (17) vorgesehen ist.

15. Hydraulische Lenkung nach einem der vorhergehenden Ansprüche, **dadurch gekennzeichnet, dass** die Zentriereinrichtung (31) eine hydrostatische Zentriereinrichtung ist, deren Kolben (45) identisch mit dem Stellkolben (20) ist und auf der Kolbenstange (21) für den Zumesskolben (14) festgelegt ist und deren Gehäuse (19) auch das Gehäuse (19) der hydrostatischen Stelleinrichtung (17) ist.

16. Hydraulische Lenkung nach einem der vorhergehenden Ansprüche, **dadurch gekennzeichnet, dass** die hydraulische Lenkung (1) einen Positionssensor (38) an dem Geberzylinder (3) und einen Positionssensor (39) an dem Nehmerzylinder (10) und einen Positionssensor (40) zur Erfassung der Position der gemeinsamen Kolbenstange (21) des Zumesskolbens (14) und des Stellkolbens (20) umfasst und dass mit den Signalen der Positionssensoren (38, 39, 40) der Geberzylinder (3) und der Nehmerzylinder (10) miteinander synchronisierbar sind.

## Claims

1. A hydraulic steering system for a leading or trailing axle (2) of a vehicle, in particular in the form of a utility vehicle, comprising a dual chamber master cylinder (3) the first chamber (4) of which and the second chamber (5) of which are connected by a first hydraulic line (6) and a second hydraulic line (7) to chambers (8, 9) of a slave cylinder (10) such as to convey fluid in order to adjust the steering angle of at least one steerable wheel at the leading or trailing axle (2), the hydraulic steering system (1) having a device (11) for superimposing the fluid flows from the master cylinder (3) to the slave cylinder (10) by means of an additional fluid flow (12), the device (11) having a metering cylinder (13) for providing the additional fluid flow (12), **characterised in that** the device (11) has a hydrostatic positioning device (17) for measuring the additional fluid flow (12) in order to superimpose the fluid flows.

2. The hydraulic steering system according to Claim 1, **characterised in that** the metering cylinder (13) has a dual-acting metering piston (14) which separates a first working chamber (15) from a second working chamber (16) within the metering cylinder (13), the first working chamber (15) being connected to the first hydraulic line (6) and the second working chamber (16) to the second hydraulic line (7) such as to convey fluid.

3. The hydraulic steering system according to any of the preceding claims, **characterised in that** the hydrostatic positioning device (17) is connected to the metering piston (14) by a mechanical coupling element (18).

4. The hydraulic steering system according to any of the preceding claims, **characterised in that** the hydrostatic positioning device (17) is accommodated in the same housing (19) that forms the metering cylinder (13).

5. The hydraulic steering system according to any of the preceding claims, **characterised in that** the metering piston (14) and a positioning piston (20) of the hydrostatic positioning device (17) have a common piston rod (21).

6. The hydraulic steering system according to any of the preceding claims, **characterised in that** the working chambers (34, 37) of the hydrostatic positioning device (17) are activated by a shift valve (22).

7. The hydraulic steering system according to any of the preceding claims, **characterised in that** the shift valve (22) is a 4/3-way valve (23) or a proportional valve.

8. The hydraulic steering system according to any of the preceding claims, **characterised in that** a 2/2-way valve (26) is connected in control lines (24, 25) between the shift valve (22) and the hydrostatic positioning device (17).

9. The hydraulic steering system according to any of the preceding claims, **characterised in that** the pressurising medium is pre-stressed in the hydrostatic positioning device (17).

10. The hydraulic steering system according to any of the preceding claims, **characterised in that** the pressurising medium is pre-stressed in the hydrostatic positioning device (17) by a pressure limiting valve (27) in a return line (28) leading to a pressurising medium container.

11. The hydraulic steering system according to any of the preceding claims, **characterised in that** the hydraulic steering system (1) has a device (30) for synchronising the master and the slave cylinder (3, 10).

12. The hydraulic steering system according to any of the preceding claims, **characterised in that** a device for synchronising a centring device (31) is provided with the aid of which the metering piston (14) of the metering cylinder (13) can be brought into a neutral position.

13. The hydraulic steering system according to any of the preceding claims, **characterised in that** the centring device (31) comprises a first shift valve (32) that comprises a fluid-conveying connection (33) between the first hydraulic line (6) and the working chamber (34) of the hydrostatic positioning device (17) and a second shift valve (35) which connects or breaks a fluid-conveying connection (36) between the second hydraulic line (7) and the working chamber (37) of the hydrostatic positioning device (17) and that in an opened position of the shift valves (32, 35) the master cylinder (3) and the slave cylinder (10) can be synchronised with one another.

14. The hydraulic steering system according to any of the preceding claims, **characterised in that** the centring device (31) is provided for centring the hydrostatic positioning device (17).

15. The hydraulic steering system according to any of the preceding claims, **characterised in that** the centring device (31) is a hydrostatic centring device the piston (45) of which is identical to the positioning piston (20) and is secured on the piston rod (21) for the metering piston (14) and the housing (19) of which is also the housing (19) of the hydrostatic positioning device (17).

16. The hydraulic steering system according to any of the preceding claims, **characterised in that** the hydraulic steering system (1) comprises a position sensor (38) on the master cylinder (3) and a position sensor (39) on the slave cylinder (10) and a position sensor (40) for detecting the position of the common piston rod (21) of the metering piston (14) and of the positioning piston (20) and that the master cylinder (3) and the slave cylinder (10) can be synchronised with one another with the signals of the position sensors (38, 39, 40).

## Revendications

1. Direction hydraulique pour un essieu (2) d'avance ou pour un essieu (2) de traînée d'un véhicule, notamment sous la forme d'un véhicule utilitaire, comprenant un cylindre (3) émetteur à deux chambres, dont la première chambre (4) et dont la seconde chambre (5) communiquent fluidiquement par une première ligne (6) hydraulique et par une seconde ligne (7) hydraulique avec des chambres (8, 9) d'un cylindre (10) récepteur pour le réglage de l'angle de braquage d'au moins une roue directrice sur l'essieu (2) d'avance ou sur l'essieu (2) de traînée, la direction (1) hydraulique ayant un dispositif (11) pour superposer des courants de fluide du cylindre (3) émetteur au cylindre (10) récepteur à l'aide d'un courant (12) de fluide supplémentaire, le dispositif (11) ayant un cylindre (13) de dosage pour la mise à disposition du courant (12) de fluide supplémentaire, **caractérisée en ce que** le dispositif (11) pour superposer les courants de fluide a un dispositif (17) de réglage hydrostatique pour le dosage du courant (12) de fluide supplémentaire.

2. Direction hydraulique suivant la revendication 1, **caractérisée en ce que** le cylindre (13) de dosage a un piston (14) de dosage à double effet, qui sépare une première chambre (15) de travail d'une seconde chambre (16) de travail dans le cylindre (13) de dosage, la première chambre (15) de travail communiquant fluidiquement avec le premier conduit (6) hydraulique et la seconde chambre (16) de travail avec le second conduit (7) hydraulique.

3. Direction hydraulique suivant l'une des revendications précédentes, **caractérisée en ce que** le dispositif (17) de réglage hydrostatique est relié au piston (14) de dosage par un élément (18) mécanique d'accouplement.

4. Direction hydraulique suivant l'une des revendications précédentes, **caractérisée en ce que** le dispositif (17) de réglage hydrostatique est logé dans l'enveloppe (19) qui forme le cylindre (13) de dosage.

5. Direction hydraulique suivant l'une des revendications précédentes, **caractérisée en ce que** le piston (14) de dosage et un piston (20) de réglage du dispositif (17) de réglage hydrostatique ont une tige (21) de piston commune.

6. Direction hydraulique suivant l'une des revendications précédentes, **caractérisée en ce que** les chambres (34, 37) de travail du dispositif (17) de réglage hydrostatique sont commandées par une vanne (22) de commande .

7. Direction hydraulique suivant l'une des revendications précédentes, **caractérisée en ce que** la vanne (22) de commande est une vanne (23) à 4/3 voies ou est une vanne proportionnelle.

8. Direction hydraulique suivant l'une des revendications précédentes, **caractérisée en ce qu'**une vanne (26) à 2/2 voies est montée dans des conduits (24, 25) de commande entre la vanne (22) de commande et le dispositif (17) de réglage hydrostatique.

9. Direction hydraulique suivant l'une des revendications précédentes, **caractérisée en ce que** le fluide sous pression dans le dispositif (17) de réglage hydrostatique est précomprimé.

10. Direction hydraulique suivant l'une des revendications précédentes, **caractérisée en ce que** le fluide sous pression dans le dispositif (17) de réglage hydrostatique est précomprimé par une soupape (27) dans un conduit (28) de retour menant à un récipient de fluide sous pression.

11. Direction hydraulique suivant l'une des revendications précédentes, **caractérisée en ce que** la direction (1) hydraulique a un dispositif (30) de synchronisation du cylindre (3) émetteur et du cylindre (10) récepteur.

12. Direction hydraulique suivant l'une des revendications précédentes, **caractérisée en ce qu'**il y a un dispositif de synchronisation d'un dispositif (31) de centrage, à l'aide duquel le piston (14) de dosage du cylindre (13) de dosage peut être mis dans une position neutre.

13. Direction hydraulique suivant l'une des revendications précédentes, **caractérisée en ce que** le dispositif (31) de centrage comprend une première vanne (32) de commande, qui ménage une communication (33) fluidique entre le premier conduit (6) hydraulique et la chambre (34) de travail du dispositif (17) de réglage hydrostatique, et une seconde vanne (35) de commande, qui ménage une communication (36) fluidique entre le second conduit (7) hydraulique et la chambre (37) de travail du dispositif (17) de réglage hydrostatique ou les sépare, et **en ce que**, lorsque les vannes (32, 35) de commande sont dans une position ouverte, le cylindre (3) émetteur et le cylindre (10) récepteur peuvent être synchronisés entre eux.

14. Direction hydraulique suivant l'une des revendications précédentes, **caractérisée en ce que** le dispositif (31) de centrage est prévu pour le centrage du dispositif (17) de réglage hydrostatique.

15. Direction hydraulique suivant l'une des revendications précédentes, **caractérisée en ce que** le dispositif (31) de centrage est un dispositif de centrage hydrostatique, dont le piston (45) est identique au piston (20) de réglage et est fixé sur la tige (21) du piston (14) de dosage et dont l'enveloppe (19) est aussi l'enveloppe (19) du dispositif (17) de réglage hydrostatique.

16. Direction hydraulique suivant l'une des revendications précédentes, **caractérisée en ce que** la direction (1) hydraulique comprend un capteur (38) de position sur le cylindre (3) émetteur et un capteur (39) de position sur le cylindre (10) récepteur et un capteur (40) de position pour détecter la position de la tige (21) commune du piston (14) de dosage et du piston (20) de réglage et **en ce que** le cylindre (3) émetteur et le cylindre (10) récepteur peuvent être synchronisés entre eux par les signaux des capteurs (38, 39, 40) de position.
